# EUROPEAN PATENT APPLICATION

(11) **EP 2 978 002 A1**
(43) Date of publication of application: **27.01.2016**
(21) Application number: 14767837.9
(22) Date of filing: 05.03.2014
(51) Int. Cl.: H01G 11/06, H01G 11/62

(54) **LITHIUM ION CAPACITOR AND METHOD FOR CHARGING AND DISCHARGING SAME**

(30) Priority: 19.03.2013 JP 2013056297
(71) Applicant: Sumitomo Electric Industries, Ltd., Osaka-shi, Osaka 541-0041 (JP)
(72) Inventor: OKUNO, Kazuki, Itami-shi Hyogo 664-0016 (JP); TAKAHASHI, Kenji, Itami-shi Hyogo 664-0016 (JP); MAJIMA, Masatoshi, Itami-shi Hyogo 664-0016 (JP); ISHIKAWA, Masashi, Suita-shi Osaka 565-0855 (JP)
(74) Representative: Boult Wade Tennant
(86) International application number: PCT/JP2014/055557
(87) International publication number: WO 2014/148250

(57) **Abstract**

A lithium ion capacitor includes a positive electrode containing a positive electrode active material, a negative electrode containing a negative electrode active material, a separator disposed between the positive electrode and the negative electrode, and a lithium ion conductive electrolyte. The electrolyte contains a lithium salt and an ionic liquid. The lithium salt is a salt of a lithium ion serving as a first cation and a first anion, and the ionic liquid is a molten salt of a second cation and a second anion. The first anion and the second anion are the same.

## Description

### Technical Field

The present invention relates to a lithium ion capacitor and a method for charging and discharging the lithium ion capacitor. More specifically, the present invention relates to an improvement in an electrolyte for the lithium ion capacitor.

### Background Art

With environmental problems being highlighted, systems for converting clean energy such as sunlight or wind power into electric power and stung the electric power as an electric energy have been actively developed. Known examples of such power storage devices include lithium ion secondary batteries (LIBs), electric double-layer capacitors (EDLCs), lithium ion capacitors, and the like. In recent years, attention has been paid to capacitors such as EDLCs and lithium ion capacitors in terms of excellent instantaneous charge-discharge characteristics, high-output characteristics, and ease of handling.

Such capacitors have a capacitance lower than that of LIBs or the like, but lithium ion capacitors have advantages of both LIBs and EDLCs and tend to have a relatively high capacitance. Therefore, such lithium ion capacitors are promising for use in various applications. Lithium ion capacitors generally include a positive electrode containing activated carbon or the like as a positive electrode active material, a negative electrode containing, as a negative electrode active material, a carbon material or the like capable of intercalating and deintercalating lithium ions, and a non-aqueous electrolyte. In such a lithium ion capacitor, a carbon material capable of intercalating and deintercalating lithium ions is used in the negative electrode. Therefore, the negative electrode potential is decreased by pre-doping the negative electrode with lithium, and thus a somewhat high capacitance is easily achieved.

The non-aqueous electrolyte of the lithium ion capacitor is generally an organic solvent solution (organic electrolyte) containing an electrolyte such as a lithium salt. The organic solvent of the electrolyte is, for example, ethylene carbonate (EC), diethyl carbonate (DEC) or the like (PTL 1). It has been also studied that an organic electrolyte containing an ionic liquid in addition to the electrolyte and the organic solvent is used for lithium ion capacitors (PTL 2).

It has been also studied in the field of LIBs that an ionic liquid is used as a solvent for an electrolyte (PTL 3). The ionic liquid is a salt that includes a cation and an anion and has liquidity in a molten state. The ionic liquid has ionic conductivity at least in a molten state.

### Citation List

### Patent Literature

PTL 1: Japanese Unexamined Patent Application Publication No. 2007-294539
PTL 2: Japanese Unexamined Patent Application Publication No. 2012-142340
PTL 3: Japanese Unexamined Patent Application Publication No. 2010-97922

### Summary of Invention

### Technical Problem

Among capacitors, lithium ion capacitors can have a relatively high charging voltage and thus are advantageous in terms of an increase in capacitance. However, as described in PTL 1 and PTL 2, an organic electrolyte is used in lithium ion capacitors. When the charging voltage of a lithium ion capacitor that uses an organic electrolyte is increased, the positive electrode potential increases during charging, which causes oxidative decomposition of an organic solvent contained in the organic electrolyte at the positive electrode. As a result, a large amount of gas is generated, which makes it difficult to stably perform charging and discharging.

In PTL 3, an ionic liquid is used as a solvent of an electrolyte for LIBs. The ionic liquid is not easily decomposed compared with EC and DEC. Therefore, it is believed that the upper-limit voltage for charging can be increased because if an ionic liquid is also used in lithium ion capacitors, there is no need to use an organic solvent; or even if an organic solvent is used, the amount of the organic solvent can be decreased. However, the present inventors have found that, in lithium ion capacitors, even when an ionic liquid is used, charging and discharging cannot sometimes be reversibly performed unlike the case of LIBs.

### Solution to Problem

In view of the foregoing, one aspect of the present invention relates to a lithium ion capacitor including a positive electrode containing a positive electrode active material, a negative electrode containing a negative electrode active material, a separator disposed between the positive electrode and the negative electrode, and a lithium ion conductive electrolyte. The electrolyte contains a lithium salt and an ionic liquid. The lithium salt is a salt of a lithium ion serving as a first cation and a first anion, and the ionic liquid is a molten salt of a second cation and a second anion. The first anion and the second anion are the same.

In such a lithium ion capacitor, charging and discharging can be reversibly performed in a stable manner. Furthermore, in such a lithium ion capacitor, charging and discharging can be stably performed even when charging is performed to an upper-limit voltage such as more than 4.2 V.

The total content of the lithium salt and the ionic liquid in the electrolyte may be, for example, 90 mass% or more. Even when the upper-limit voltage for charging is high, charging and discharging can be performed more stably by using such an electrolyte. Furthermore, even when a solvent having low resistance to decomposition (e.g., an organic solvent such as a carbonate) is contained, the amount of the solvent can be decreased, and thus the generation of gas caused by decomposition of the solvent can be effectively suppressed.

The first anion and the second anion are each preferably a bis(fluorosulfonyl)imide anion or a bis(trifluoromethylsulfonyl)imide anion. When the electrolyte contains such an anion, the viscosity of the electrolyte is easily decreased and lithium ions can be smoothly intercalated into the negative electrode active material, which is advantageous in reversibly performing charging and discharging.

The second cation is preferably an organic onium cation. The organic onium cation preferably has a nitrogen-containing heterocycle. When the electrolyte contains such a second cation, the melting point of the molten salt can be decreased, and therefore ions can be more smoothly moved.

The electrolyte preferably has a lithium concentration of 1 mol/L to 5 mol/L. By using the electrolyte having such a lithium concentration, the capacitance or output of the lithium ion capacitor can be more effectively increased.

The negative electrode active material preferably contains at least one selected from the group consisting of graphite and hard carbon. Such a negative electrode active material has good properties of intercalating and deintercalating lithium ions, and thus charging and discharging can be more smoothly performed.

The ratio Cₙ /Cₚ of a reversible capacitance Cₙ of the negative electrode to a reversible capacitance Cₚ of the positive electrode may be, for example, 1.2 to 10. At such a reversible capacitance ratio, the negative electrode can be pre-doped with a sufficient amount of lithium, and thus the capacitance or voltage of the lithium ion capacitor can be more effectively increased.

Another aspect of the present invention relates to a method for charging and discharging a lithium ion capacitor, the method including a step of charging and discharging the lithium ion capacitor at an upper-limit voltage of more than 4.2 V and 5 V or less. The lithium ion capacitor includes a positive electrode containing a positive electrode active material, a negative electrode containing a negative electrode active material capable of intercalating and deintercalating lithium ions, a separator disposed between the positive electrode and the negative electrode, and a lithium ion conductive electrolyte. The electrolyte contains a lithium salt and an ionic liquid; the lithium salt is a salt of a lithium ion serving as a first cation and a first anion, and the ionic liquid is a molten salt of a second cation and a second anion; and the first anion and the second anion are the same. When the electrolyte has the above-described composition, charging and discharging can be reversibly performed in a stable manner even at a high upper-limit voltage for charging of more than 4.2 V and 5 V or less.

### Advantageous Effects of Invention

According to the present invention, even when the electrolyte contains an ionic liquid, the lithium ion capacitor can be reversibly charged and discharged in a stable manner. Furthermore, even when charging is performed to a high upper-limit voltage, generation of gas, or the like does not easily occur. Therefore, a high-capacitance lithium ion capacitor can be produced.

### Brief Description of Drawings

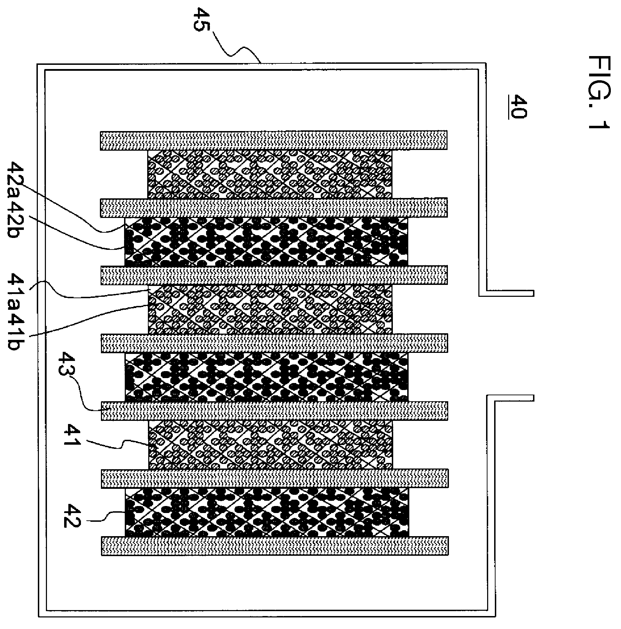

[Fig. 1] Figure 1 is a sectional view illustrating a structure of an example of a capacitor.

### Description of Embodiments

A lithium ion capacitor includes a positive electrode containing a positive electrode active material, a negative electrode containing a negative electrode active material, a separator disposed between the positive electrode and the negative electrode, and a lithium ion conductive electrolyte. The electrolyte contains a lithium salt and an ionic liquid. The lithium salt is a salt of a lithium ion serving as a first cation and a first anion. The ionic liquid is a molten salt of a second cation and a second anion. The first anion and the second anion are the same.

Use of an ionic liquid as a solvent of an electrolyte for LIBs has been studied in order to improve the safety and/or the charging voltage. It is also believed that the charging voltage can be improved by using an ionic liquid for an electrolyte in lithium ion capacitors. In the negative electrode for LIBs, a negative electrode active material capable of intercalating and deintercalating lithium ions is used. Such a negative electrode active material is believed to reversibly cause the intercalation and deintercalation of lithium ions during charging and discharging.

In lithium ion capacitors, however, the electrolyte is the only lithium source, unlike in LIBs in which lithium ions are supplied from the positive electrode. Therefore, ease of movement of lithium ions considerably affects the charge-discharge characteristics. For example, since the degree of the interaction with lithium ions varies depending on the types of anions constituting the ionic liquid and the lithium salt, the intercalation of lithium ions into the negative electrode active material is sometimes delayed. In addition to the delay of the intercalation of lithium ions, a phenomenon in which a cation constituting the ionic liquid is intercalated into the negative electrode active material also occurs. The intercalation of the cation (a cation other than a lithium ion) constituting the ionic liquid into the negative electrode active material irreversibly occurs. That is, even if a charging reaction seemingly proceeds as a result of the intercalation of the cation, discharging cannot be performed because the cation is not deintercalated. Furthermore, a cation other than a lithium ion is irreversibly intercalated into the negative electrode active material. This considerably decreases the discharge capacity, and charging and discharging cannot be reversibly performed in a repeated manner. Therefore, even if an ionic liquid is used, charging and discharging cannot sometimes be reversibly performed in a stable manner. Even if the charging voltage is increased, the capacitance of the lithium ion capacitor cannot sometimes be increased.

In LIBs, a large amount of lithium ions is supplied from the positive electrode during charging, and thus the intercalation of lithium ions into the negative electrode active material is not inhibited. Therefore, use of an ionic liquid does not pose the above-described problem.

In lithium ion capacitors, however, lithium ions are not supplied from the positive electrode, which poses a problem in that a cation other than a lithium ion is irreversibly intercalated into the negative electrode active material. That is, such a problem of the irreversible intercalation of a cation is unique to lithium ion capacitors.

The present inventors have found that, when an anion (first anion) constituting a lithium salt is the same as an anion (second anion) constituting an ionic liquid in an electrolyte for lithium ion capacitors, the irreversible intercalation of a cation (second cation) constituting the ionic liquid into a negative electrode active material is suppressed. Although the reason for this is unclear, it is believed that the degree of the interaction with lithium ions is not differentiated. When the electrolyte containing such an anion is used for lithium ion capacitors, the intercalation of lithium ions into the negative electrode active material preferentially occurs. Therefore, it has been found that charging and discharging can be reversibly performed in a stable manner and, even when charging is performed to a high voltage such as more than 4.2 V, charging and discharging can be stably performed.

In a method for charging and discharging a lithium ion capacitor according to the present invention, the lithium ion capacitor can be charged and discharged at an upper-limit voltage exceeding 4.2 V. Thus, the capacity of a positive electrode active material can be effectively used, and the capacitance of the lithium ion capacitor can be considerably increased. The upper-limit voltage is preferably 4.4 V or more and more preferably 4.6 V or more, or may be 4.8 V or more. The upper-limit voltage may be more than 5 V, but is preferably 5 V or less. The lower limit and the upper limit can be suitably combined with each other. The upper-limit voltage for charging is, for example, more than 4.2 V and 5 V or less or may be 4.4 V to 5 V.

In the electrolyte, the ionic liquid has not only a function as a carrier of ions, but also a function as a solvent for dissolving the lithium salt. Therefore, the electrolyte preferably contains the ionic liquid in a particular amount. The electrolyte may contain a publicly known component contained in an electrolyte for lithium ion capacitors, such as an organic solvent or an additive. In the case where the electrolyte contains an organic solvent, however, gas is easily generated by decomposition when the charging voltage is increased. Therefore, the content of a component other than the lithium salt and the ionic liquid is preferably relatively low. Specifically, the total content of the lithium salt and the ionic liquid in the electrolyte is preferably 90 mass% or more and more preferably 95 mass% or more. In particular, the electrolyte preferably does not contain an organic solvent such as a carbonate, and the total content of the lithium salt and the ionic liquid in the electrolyte may be 100 mass%.

If the total content of the lithium salt and the ionic liquid is high, the decomposition of the electrolyte tends to be more effectively suppressed even when the charging voltage is increased. Thus, charging and discharging can be performed in a more stable manner.

Hereafter, the components of the electrolyte will be described in detail.

### (Electrolyte)

The lithium salt contained in the electrolyte is dissociated into a lithium ion and a first anion in the electrolyte, and the lithium ion serves as a charge carrier in the lithium ion capacitor.

The first anion and a second anion constituting the ionic liquid are each preferably a bis(sulfonyl)imide anion.

The bis(sulfonyl)imide anion is, for example, an anion which has a bis(sulfonyl)imide skeleton and in which a sulfonyl group has a fluorine atom. Examples of the sulfonyl group having a fluorine atom include fluorosulfonyl groups and sulfonyl groups having a fluoroalkyl group. In the fluoroalkyl group, some hydrogen atoms of the alkyl group may be substituted with fluorine atoms. Alternatively, the fluoroalkyl group may be a perfluoroalkyl group in which all hydrogen atoms are substituted with fluorine atoms. The sulfonyl group having a fluorine atom is preferably a fluorosulfonyl group or a perfluoroalkylsulfonyl group.

The bis(sulfonyl)imide anion is specifically an anion represented by formula (1) below. 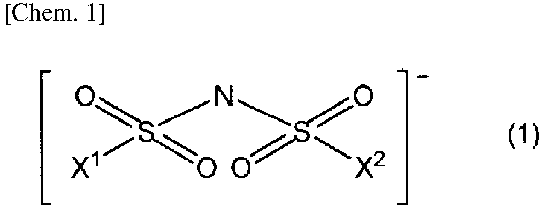 (X¹ and X² each independently represent a fluorine atom or a perfluoroalkyl group having 1 to 8 carbon atoms.)

The perfluoroalkyl group represented by X¹ and X² is, for example, a trifluoromethyl group, a pentafluoroethyl group, a heptafluoropropyl group, or the like. In order to decrease the viscosity of the ionic liquid, at least one of X¹ and X² preferably represents a perfluoroalkyl group, and both X¹ and X² more preferably represent a perfluoroalkyl group. Furthermore, in order to decrease the viscosity of the ionic liquid, the number of carbon atoms in the perfluoroalkyl group is preferably 1 to 3 and more preferably 1 or 2.

Specific examples of the bis(sulfonyl)imide anion include bis(fluorosulfonyl)imide anions (FSI⁻); and bis(perfluoroalkylsulfonyl)imide anions (PFSI⁻) such as a bis(trifluoromethylsulfonyl)imide anion (TFSI⁻), a bis(pentafluoroethylsulfonyl)imide anion, and a fluorotrifluoromethylsulfonylimide anion ((FSO₂)(CF₃SO₂)N⁻).

Among these anions, FSI⁻ or TFSI⁻ (in particular, FSI⁻) is preferably used because it has a relatively low interaction with lithium ions, does not easily capture the lithium ions, and does not easily inhibit the intercalation of lithium ions into the negative electrode active material. When FSI⁻ or TFSI⁻ (in particular, FSI⁻) is used, lithium ions can be more smoothly intercalated into the negative electrode active material and charging and discharging can be performed more stably. Furthermore, FSI⁻ or TFSI⁻ can decrease the viscosity of the electrolyte and can dissolve the lithium salt well.

Examples of the second cation constituting the ionic liquid include inorganic cations [e.g., metal cations such as alkali metal cations other than a lithium ion (e.g., sodium ion, potassium ion, rubidium ion, and cesium ion), alkaline-earth metal cations (e.g., magnesium ion and calcium ion), and transition metal cations; and ammonium cations]; organic cations such as organic onium cations; and the like.

The second cation is preferably an organic onium cation. Examples of the organic onium cation include cations derived from an aliphatic amine, an alicyclic amine, and an aromatic amine (e.g., quaternary ammonium cations); nitrogen-containing onium cations such as cations having a nitrogen-containing heterocycle (i.e., cations derived from a cyclic amine); sulfur-containing onium cations; phosphorus-containing onium cations; and the like.

Examples of the sulfur-containing onium cation include sulfur-containing tertiary onium cations, for example, trialkylsulfonium cations (e.g., triC₁₋₁₀ alkylsulfonium cations) such as trimethylsulfonium cations, trihexylsulfonium cations, and dibutylethylsulfonium cations.

Examples of the phosphorus-containing onium cation include quaternary onium cations, for example, tetraalkylphosphonium cations (e.g., tetraC₁₋₁₀ alkylphosphonium cations) such as tetramethylphosphonium cations, tetraethylphosphonium cations, and tetraoctylphosphonium cations; and alkyl(alkoxyalkyl)phosphonium cations (e.g., triC₁₋₁₀ alkyl(C₁₋₅ alkoxyC₁₋₅ alkyl)phosphonium cations) such as triethyl(methoxymethyl)phosphonium cations, diethylmethyl(methoxymethyl)phosphonium cations, trihexyl(methoxyethyl)phosphonium cations; and the like. In the alkyl(alkoxyalkyl)phosphonium cations, the total number of alkyl groups and alkoxyalkyl groups that bond to phosphorus atoms is 4, and the number of alkoxyalkyl groups is preferably 1 or 2.

Among the organic onium cations, nitrogen-containing organic onium cations are preferred. Among them, organic onium cations having a nitrogen-containing heterocycle are preferred. When the electrolyte contains such an organic onium cation, the viscosity of the molten salt can be decreased, and thus the ionic conductivity can be improved.

Examples of the nitrogen-containing heterocycle skeleton of the organic onium cation include five to eight-membered heterocycles having one or two nitrogen atoms as atoms constituting the ring, such as pyrrolidine, imidazoline, imidazole, pyridine, and piperidine; and five to eight-membered heterocycles having one or two nitrogen atoms and other heteroatoms (e.g., oxygen atom and sulfur atom) as atoms constituting the ring, such as morpholine.

The nitrogen atoms which are atoms constituting the ring may have an organic group such as an alkyl group as a substituent. Examples of the alkyl group include alkyl groups having 1 to 10 carbon atoms, such as a methyl group, an ethyl group, a propyl group, and an isopropyl group. The number of carbon atoms of the alkyl group is preferably 1 to 8, more preferably 1 to 4, and particularly preferably 1, 2, or 3.

Nitrogen-containing organic onium cations including pyrrolidone or imidazoline as a nitrogen-containing heterocycle skeleton are particularly preferred. The organic onium cation having a pyrrolidone skeleton preferably has two of the above-described alkyl groups on one nitrogen atom constituting the pyrrolidine ring. The organic onium cation having an imidazoline skeleton preferably has one of the above-described alkyl groups on each of two nitrogen atoms constituting the imidazoline ring.

Specific examples of the organic onium cation having a pyrrolidine skeleton include N,N-dimethylpymolidinium cations, N,N-diethylpyrrolidinium cations, N-methyl-N-ethylpyrrolidinium cations, N-methyl-N-propylpyrrolidinium cations (MPPY⁺), N-methyl-N-butylpyrrolidinium cations (MBPY⁺), N-ethyl-N-propylpyrrolidinium cations, and the like. Among them, pyrrolidinium cations having a methyl group and an alkyl group with 2 to 4 carbon atoms, such as MPPY⁺ and MBPY⁺, are particularly preferred in view of high electrochemical stability.

Specific examples of the organic onium cation having an imidazoline skeleton include a 1,3-dimethylimidazolium cation, a 1-ethyl-3-methylimidazolium cation (EMI⁺), a 1-methyl-3-propylimidazolium cation, a 1-butyl-3-methylimidazolium cation (BMI⁺), a 1-ethyl-3-propylimidazolium cation, a 1-butyl-3-ethylimidazolium cation, and the like. Among them, imidazolium cations having a methyl group and an alkyl group with 2 to 4 carbon atoms, such as EMI⁺ and BMI⁺, are preferred.

The second cation is preferably an organic onium cation having an imidazoline skeleton because the reactivity with a positive electrode active material is low and the resistance to decomposition is high even when the charging voltage is increased. The second cation is particularly preferably EMI⁺ because the ionic conductivity is high. Specific examples of a salt of the second cation and the second anion include EMIFSI, EMITFSI, MIPFSI, and the like. The ionic liquid preferably contains at least EMIFSI because such an ionic liquid does not easily inhibit the intercalation of lithium ions, has high resistance to decomposition, and can dissolve a lithium salt well.

The salt of the second cation and the second anion preferably has a low melting point because the salt needs to be in a molten state (ionic liquid) at an operational temperature of the lithium ion capacitor. To control the melting point of the ionic liquid within an appropriate range, a plurality of salts may be used in combination. Herein, the anion of these salts needs to be the same as the first anion, but the cation can be suitably selected from those exemplified as the second cation and can be combined. For example, the ionic liquid may contain a salt that uses an EMI⁺ cation, such as EMIFSI, and a salt that uses an MPPY⁺ cation, such as MPPYFSI.

The lithium concentration in the electrolyte is, for example, more than 0.8 mol/L and less than 5.5 mol/L. The lithium concentration is preferably 1 mol/L or more, more preferably 1.5 mol/L or more or 2 mol/L or more, and particularly preferably 2.5 mol/L or more or 3 mol/L or more. The lithium concentration is preferably 5 mol/L or less and more preferably 4.5 mol/L or less or 4 mol/L or less. The lower limit and the upper limit can be suitably combined with each other. The lithium concentration in the electrolyte may be 1 mol/L to 5 mol/L, 2.5 mol/L to 5 mol/L, or 3 mol/L to 5 mol/L.

When the lithium concentration is within the above range, the intercalation of a cation other than a lithium ion into the negative electrode active material can be more effectively suppressed, and the influence exerted by loss of current and resistance during charging and discharging is easily reduced. Furthermore, since an unnecessary increase in the viscosity of the electrolyte can be suppressed, high ionic conductivity can be more effectively achieved. Even if the upper-limit voltage for charging is increased, stable charging and discharging can be performed more effectively. This provides an advantage in terms of an increase in the capacitance or output of the lithium ion capacitor. In addition, even when an electrode is thick or the filling amount of an electrode active material is large, charging and discharging can be efficiently performed.

A large amount of water in the electrolyte makes it difficult to increase the upper-limit voltage for charging. Therefore, the amount of water in the electrolyte is preferably 300 ppm or less (e.g., 150 ppm or less) and more preferably 40 ppm or less. The amount of water in the electrolyte can be decreased by drying components (e.g., lithium salt and ionic liquid) in the electrolyte or drying the positive electrode and/or the negative electrode (or the active material thereof). The drying can be performed in a reduced pressure and may be performed under heating, if necessary.

Hereafter, components other than the electrolyte in the lithium ion capacitor will be described in detail.

### (Electrode)

Electrodes (positive electrode and negative electrode) of the lithium ion capacitor each contain an electrode active material. In addition to the electrode active material, the electrodes can contain an electrode current collector that holds the electrode active material.

The electrode current collector may be a metal foil, but is preferably a metal porous body having a three-dimensional network structure in terms of achieving a high-capacitance capacitor. The positive electrode current collector is preferably made of aluminum, an aluminum alloy, or the like. The negative electrode current collector is preferably made of copper, a copper alloy, nickel, a nickel alloy, stainless steel, or the like.

Each of the electrodes can be obtained by applying a slurry containing an electrode active material onto an electrode current collector or filling an electrode current collector with a slurry containing an electrode active material and then removing a dispersion medium contained in the slurry, and optionally rolling the current collector that holds the electrode active material. The slurry may contain, for example, a binder, a conductive aid, and the like, in addition to the electrode active material. The dispersion medium is, for example, an organic solvent such as N-methyl-2-pyrrolidone (NMP) or water.

The type of binder is not particularly limited. Examples of the binder include fluororesins such as polyvinylidene fluoride (PVDF) and polytetrafluoroethylene; chlorine-containing vinyl resins such as polyvinyl chloride; polyolefin resins; rubber polymers such as styrene-butadiene rubber; polyvinylpyrrolidone; polyvinyl alcohol; cellulose derivatives (e.g., cellulose ethers) such as carboxymethyl cellulose; and the like. The amount of the binder is not particularly limited, but may be, for example, 0.5 parts by mass to 10 parts by mass relative to 100 parts by mass of the electrode active material.

The type of conductive aid is not particularly limited. Examples of the conductive aid include carbon black such as acetylene black, conductive fiber such as carbon fiber, and the like. The amount of the conductive aid is not particularly limited, but may be, for example, 0.1 parts by mass to 10 parts by mass relative to 100 parts by mass of the electrode active material.

The positive electrode active material is a material that can reversibly hold lithium and can electrochemically adsorb an anion, such as activated carbon or carbon nanotube. Among them, activated carbon is preferred. For example, the content of the activated carbon in the positive electrode active material is preferably more than 50 mass%.

Publicly known activated carbon for use in lithium ion capacitors can be used as the activated carbon. Examples of raw materials for activated carbon include wood, coconut shells, spent liquor, coal or coal pitch obtained by thermal cracking of coal, heavy oil or petroleum pitch obtained by thermal cracking of heavy oil, a phenolic resin, and the like.

In general, a carbonized material is then activated. Examples of the activation method include a gas activation method and a chemical activation method. In the gas activation method, by performing contact reaction with water vapor, carbon dioxide, oxygen, or the like at high temperatures, activated carbon is obtained. In the chemical activation method, the raw materials described above are impregnated with a known chemical activation agent, heating is performed in an inert gas atmosphere to cause dehydration and oxidation reaction of the chemical activation agent, and thereby activated carbon is obtained. The chemical activation agent is, for example, zinc chloride, sodium hydroxide, or the like.

The average particle diameter (median diameter in the volume-based particle size distribution, the same applies hereafter) of the activated carbon is not particularly limited, but is preferably 20 µm or less. The specific surface area is also not particularly limited, but is preferably about 800 m²/g to 3000 m²/g. In these ranges, the capacitance of the lithium ion capacitor can be increased and the internal resistance can be decreased.

Examples of the negative electrode active material include a carbon material capable of intercalating and deintercalating lithium ions, lithium titanium oxide, silicon oxide, a silicon alloy, tin oxide, and a tin alloy. Examples of the carbon material include graphitizable carbon (soft carbon), non-graphitizable carbon (hard carbon), graphite (e.g., synthetic graphite and natural graphite), and the like. These negative electrode active materials may be used alone or in combination of two or more. Among the negative electrode active materials, a carbon material is preferred and graphite and/or hard carbon is particularly preferred.

The negative electrode active material is preferably doped with lithium in advance to decrease the negative electrode potential. This increases the voltage of the capacitor, which is further advantageous to an increase in the capacitance of the lithium ion capacitor. The doping with lithium is performed during the fabrication of a capacitor. For example, a lithium metal is accommodated in a capacitor container together with a positive electrode, a negative electrode, and a nonaqueous electrolyte, and the fabricated capacitor is kept warm in a thermostatic chamber at about 60°C. As a result, lithium ions are eluted from a lithium metal foil and intercalated into the negative electrode active material. The negative electrode active material is doped with lithium in such an amount that preferably 5% to 90% and more preferably 10% to 75% of the negative electrode capacitance (reversible capacitance of negative electrode) Cₙ is filled with lithium. This sufficiently decreases the negative electrode potential, and a high-voltage capacitor is easily produced.

Known lithium ion capacitors are designed so as to have a negative electrode capacitance Cₙ which is much higher than the positive electrode capacitance (reversible capacitance of positive electrode) Cₚ. One of the reasons is that achieving the ability of the positive electrode to adsorb and desorb an anion makes it difficult to form a thick layer containing the positive electrode active material. An increase in the thickness of the layer containing the positive electrode active material makes it difficult to achieve the adsorption and desorption (charging and discharging) of an anion by the positive electrode active material in a surface layer portion. This decreases the positive electrode utilization ratio (the amount of charge actually accumulated/the theoretical value of the amount of accumulable charge calculated from the amount of the active material). The other reason is that the negative electrode active material needs to be pre-doped with a relatively large amount of lithium to decrease the negative electrode potential.

Therefore, the negative electrode capacitance Cₙ of known lithium ion capacitors is more than ten times the positive electrode capacitance Cₚ.

According to the present invention, charging and discharging can be reversibly performed to an upper-limit voltage such as more than 4.2 V in a stable manner, and thus the capacitance of the positive electrode can be effectively increased. Therefore, the ratio Cₙ /Cₚ of the negative electrode capacitance Cₙ to the positive electrode capacitance Cₚ can be set to a relatively low value.

Herein, the positive electrode capacitance Cₚ is a value obtained by subtracting the irreversible capacitance from a theoretical value of the amount of accumulable charge calculated from the amount of the positive electrode active material contained in the positive electrode. The negative electrode capacitance Cₙ is a value obtained by subtracting the irreversible capacitance from a theoretical value of the amount of accumulable charge calculated from the amount of the negative electrode active material contained in the negative electrode. Cₚ can also be evaluated based on the discharge capacity measured in an EDLC that uses a positive electrode. Cₙ can also be evaluated based on the discharge capacity measured in a half cell that uses a negative electrode and a metal lithium.

The Cₙ/Cₚ ratio is, for example, more than 1.1 and less than 12.5. The Cₙ/Cₚ ratio is preferably 1.2 or more and more preferably 1.3 or more or 2 or more. The Cₙ/Cₚ ratio is preferably 10 or less and more preferably 9 or less. The lower limit and the upper limit can be suitably combined with each other. The Cₙ/Cₚ ratio may be, for example, 1.2 to 10 or 1.3 to 10.

When the Cₙ/Cₚ ratio is within the above-described range, the negative electrode can be pre-doped with a sufficient amount of lithium, and the voltage of the lithium ion capacitor can be more effectively increased. Furthermore, the initial voltage is easily increased, which is advantageous because the capacitance of the lithium ion capacitor can be easily increased. Moreover, there is no need to increase the volume of the positive electrode or the negative electrode to a volume larger than necessary. Therefore, the decrease in the capacitance density of the lithium ion capacitor is easily suppressed while high discharge capacity is achieved.

### (Separator)

A separator has ionic permeability and is disposed between the positive electrode and the negative electrode, thereby physically separating the electrodes to prevent a short-circuit. The separator has a porous structure and retains an electrolyte in the pores, which achieves permeation of ions. The separator can be made of, for example, polyolefin such as polyethylene or polypropylene, polyester such as polyethylene terephthalate, polyamide, polyimide, cellulose, glass fiber, or the like.

The thickness of the separator is, for example, about 10 µm to 100 µm.

Figure 1 schematically illustrates a structure of an example of a capacitor. A group of plates and an electrolyte, which are main components of a capacitor 40, are accommodated in a cell case 45. The group of plates is constituted by stacking a plurality of positive electrodes 41 and a plurality of negative electrodes 42 with separators 43 disposed therebetween. Each of the positive electrodes 41 includes a positive electrode current collector 41a having a three-dimensional network structure and a particulate positive electrode active material 41b that fills communicating pores of the positive electrode current collector 41a. Each of the negative electrodes 42 includes a negative electrode current collector 42a having a three-dimensional network structure and a particulate negative electrode active material 42b that fills communicating pores of the negative electrode current collector 42a.

Herein, the group of plates is not limited to the stacked structure, but may be constituted by winding the positive electrode 41 and the negative electrode 42 with the separator 43 disposed therebetween. The size of the negative electrode 42 is desirably set to be larger than that of the positive electrode 41 as illustrated in Fig. 1 in order to prevent lithium from precipitating on the negative electrode 42.

### EXAMPLES

Hereafter, the present invention will be specifically described based on Examples and Comparative Examples, but the present invention is not limited to Examples below.

### Example 1

A lithium ion capacitor was produced by the following procedure.

### (1) Production of positive electrode

An activated carbon powder (specific surface area: 2300 m²/g, average particle diameter: about 5 µm), acetylene black serving as a conductive aid, PVDF (NMP solution containing PVDF at a concentration of 12 mass%) serving as a binder, and NMP serving as a dispersion medium were mixed and stirred using a mixer to prepare a positive electrode mixture scurry. In the scurry, the content of the activated carbon was 21.5 mass%, the content of the acetylene black was 0.76 mass%, and the content of the PVDF was 20.6 mass%.

The prepared positive electrode mixture slurry was applied onto one surface (roughened surface) of an aluminum foil (thickness: 20 µm) serving as a current collector using a doctor blade to form a coating film having a thickness of 100 µm. The coating film was dried at 100°C for 30 minutes. The dried film was rolled using a pair of rolls to produce a positive electrode having a thickness of 65 µm.

### (2) Production of negative electrode

A hard carbon powder (average particle diameter: 10 µm), acetylene black serving as a conductive aid, PVDF (NMP solution containing PVDF at a concentration of 12 mass%) serving as a binder, and NMP serving as a dispersion medium were mixed and stirred using a mixer to prepare a negative electrode mixture slurry. In the slurry, the content of the hard carbon was 28.0 mass%, the content of the acetylene black was 2.7 mass%, and the content of the PVDF was 13.3 mass%.

The prepared negative electrode mixture slurry was applied onto one surface of a punched copper foil (thickness: 20 µm, opening diameter: 50 µm, opening ratio: 50%) serving as a current collector using a doctor blade to form a coating film having a thickness of 200 µm. The coating film was dried at 100°C for 30 minutes. The dried film was rolled using a pair of rolls to produce a negative electrode having a thickness of 120 µm.

### (3) Production of lithium electrode

A lithium foil (thickness: 50 µm) was pressure-bonded to one surface of a punched copper foil (thickness: 20 µm, opening diameter: 50 µm, opening ratio: 50%, 2 cm x 2 cm) serving as a current collector to produce a lithium electrode. A lead made of nickel was welded on another surface of the current collector.

### (4) Production of lithium ion capacitor

The positive electrode produced in (1) and the negative electrode produced in (2) were each cut into a size of 1.5 cm x 1.5 cm, and a portion of the mixture having a width of 0.5 mm was removed along one side to form a current collector-exposed portion. A lead made of aluminum was welded to the current collector-exposed portion of the positive electrode and a lead made of nickel was welded to the current collector-exposed portion of the negative electrode. In each of the produced positive electrode and negative electrode, the area of a portion where the mixture was present was 1.5 cm⁻².

A cellulose separator (thickness: 60 µm) was disposed between the positive electrode and the negative electrode so that the positive electrode and the negative electrode were stacked onto each other. Thus, a group of plates of a single cell was produced. Furthermore, the lithium electrode was disposed on the negative electrode side of the group of plates with a polyolefin separator (a stack of a polyethylene microporous membrane and a polypropylene microporous membrane) disposed between the lithium electrode and the group of plates. The resulting stack was accommodated in a cell case made of an aluminum laminate sheet.

Subsequently, an electrolyte was poured into the cell case so that the positive electrode, the negative electrode, and the separator were impregnated with the electrolyte. The electrolyte was an EMIFSI solution containing LiFSI as a lithium salt at a concentration of 1.0 mol/L. Lastly, the cell case was sealed while the pressure was reduced using a vacuum sealer.

The negative electrode and the lithium electrode were connected to each other through a lead at the outside of the cell case. Charging was performed at a current of 0.2 mA/cm² until the voltage reached 0 V to pre-dope the negative electrode active material with lithium. Subsequently, 0.33 mAh of discharging was performed at a current of 0.2 mA/cm². The voltage (initial voltage) after the discharging was measured.

Thus, a lithium ion capacitor was produced. The amount of water in the electrolyte contained in the lithium ion capacitor was measured by a Karl Fischer method, and the amount was 108 ppm.

The following evaluations were conducted using the produced positive electrode, negative electrode, and lithium ion capacitor.

### (a) Electrode capacitance and Cₚ/Cₙ ratio

Two positive electrodes were prepared, and a cellulose separator (thickness: 60 µm) was disposed between the positive electrodes to form a group of plates. Subsequently, the group of plates and the above-described electrolyte were accommodated in an aluminum laminate bag to complete an EDLC.

The obtained EDLC was charged and discharged in a voltage range of 0 to 4 V, and the reversible capacitance Cₚ of the positive electrode was determined from the discharge capacity.

The negative electrode and the above-described lithium electrode were prepared, and a cellulose separator (thickness: 60 µm) was disposed therebetween to form a group of plates. A half cell was produced using the formed group of plates and the above-described electrolyte. The half cell was charged and discharged in a voltage range of 0 to 2.5 V, and the reversible capacitance Cₙ of the negative electrode was determined from the discharge capacity.

The Cₚ/Cₙ ratio was calculated by dividing Cₚ by Cₙ.

### (b) Upper-limit voltage for charging

Charging was performed at a current of 0.4 mA/cm² until the voltage reached 3.8 V, and discharging was performed until the voltage reached 3.0 V. Subsequently, charging and discharging were performed in the same manner as above, except that the upper-limit voltage for charging was increased to 5.0 V in increments of 0.2 V. Thus, the upper-limit voltage at which charging can be performed was measured.

### (c) Capacitance of lithium ion capacitor

Charging was performed at a current of 0.4 mA/cm² until the voltage reached the upper-limit voltage measured in (b), and discharging was performed until the voltage reached 3.0 V. The charge capacity (mAh) and the discharge capacity (mAh) herein were determined.

### Examples 2 to 4 and Comparative Examples 1 to 3

A lithium ion capacitor was produced and evaluated in the same manner as in Example 1, except that an electrolyte containing a lithium salt and a medium (ionic liquid or organic solvent) listed in Table 1 was used as the electrolyte. In Comparative Example 1, a mixed solvent containing EC and DEC at a volume ratio of 1:1 was used as the medium.

Table 1 shows the results.

**[Table 1]**

| | | | | | Discharge capacity (mAh) | Upper-limit voltage (V) |
|---|---|---|---|---|---|---|
| | Lithium salt | Medium | Cₚ (mAh) | Cₙ/Cₚ | | |
| Example 1 | LiFSI | EMIFSI | 0.30 | 8.3 | 0.31 | 5.0 |
| Example 2 | LiFSI | BMIFSI | | | 0.29 | 5.0 |
| Example 3 | LiFSI | MPPYFSI | | | 0.30 | 5.0 |
| Example 4 | LiFSI | MBPYFSI | | | 0.28 | 5.0 |
| Comparative Example 1 | LiPF₆ | EC+DEC | | | 0.18 | 4.2 |
| Comparative Example 2 | LiTFSI | EMIFSI | | | 0.03 | (5.0) |
| Comparative Example 3 | LiTFSI | EPPYFSI | | | 0.02 | (5.0) |

In Comparative Example 1 in which the ionic liquid was not used, when the upper-limit voltage for charging was 3.8 V and 4.2V, charging and discharging could be stably performed. However, when charging was performed to 4.4 V, the lithium ion capacitor swelled and thus the charging was stopped. That is, the upper-limit voltage for charging was 4.2 V in the lithium ion capacitor of Comparative Example 1. The reason why the lithium ion capacitor swelled may be that when charging was performed to a high voltage exceeding 4.2 V, the electrolyte was decomposed and a gas was generated. The discharge capacity of the lithium ion capacitor in Comparative Example 1 was 0.18 mAh, which was much lower than 0.3 mAh of Cₚ. The discharge capacity was low in Comparative Example 1 because charging was performed to only 4.2 V and thus the capacitance of the positive electrode was not sufficiently utilized.

In Comparative Examples 2 and 3, the ionic liquid was used, but the types of anions in the lithium salt and the ionic liquid were different. In Comparative Examples 2 and 3, even when the upper-limit voltage for charging was increased to 5.0 V, the swelling of the lithium ion capacitor in Comparative Example 1 was not observed. In Comparative Examples 2 and 3, however, the discharge capacity of the lithium ion capacitor considerably decreased, and the discharge capacity was 1/10 or less of Cₚ. As a result of the evaluation of the charge capacity in Comparative Examples 2 and 3, the charge capacity was about 0.15 mAh, which was half of Cₚ. That is, in Comparative Examples 2 and 3, charging was performed to some extent, but the discharge capacity relative to the charge capacity was considerably low. Therefore, charging and discharging could not be reversibly performed in a stable manner at a high charging voltage.

In Examples 1 to 4 in which the anion of the lithium salt and the anion of the ionic liquid were the same, charging and discharging could be stably performed at an upper-limit voltage for charging of 3.8 V to 5 V. In Examples, the discharge capacity of the lithium ion capacitor was substantially equal to Cₚ, and the utilization efficiently of the positive electrode was high. Therefore, in Examples, a high-capacitance lithium ion capacitor was produced.

### Examples 5 to 8

A lithium ion capacitor was produced in the same manner as in Example 1, except that the concentration of the lithium salt in the electrolyte was changed to that listed in Table 2. The upper-limit voltage and the discharge capacity were evaluated.

Table 2 shows the results.

**[Table 2]**

| | Concentration of Li salt (mol/L) | | | Discharge capacity (mAh) | Upper-limit voltage (V) |
|---|---|---|---|---|---|
| | | Cₚ (mAh) | Cₙ/Cₚ | | |
| Example 5 | 0.8 | 0.30 | 8.3 | 0.24 | 5.0 |
| Example 1 | 1.0 | | | 0.31 | 5.0 |
| Example 6 | 3.0 | | | 0.35 | 5.0 |
| Example 7 | 5.0 | | | 0.33 | 5.0 |
| Example 8 | 5.5 | | | 0.21 | 5.0 |

In Examples 6 and 7, even when the upper-limit voltage for charging was 5 V, charging and discharging could be stably performed as in the case of Example 1, and the capacity was equal to or higher than Cₚ. In Examples 5 and 8, although the discharge capacity of the lithium ion capacitor was slightly lower than Cₚ, charging and discharging could be performed even when the upper-limit voltage for charging was 5 V. In Example 5, the charge capacity of the lithium ion capacitor evaluated was more than 0.3 mAh, which was as high as Cₚ. In view of achieving a high discharge capacity, the concentration of the lithium salt is preferably more than 0.8 mol/L and less than 5.5 mol/L.

### Examples 9 to 14

A negative electrode and a lithium ion capacitor were produced in the same manner as in Example 1, except that the thickness of the coating film of the negative electrode mixture slurry and the thickness of the negative electrode were changed to those listed in Table 3. The upper-limit voltage and the discharge capacity were evaluated in the same manner as in Example 1. When the thickness of the coating film was less than 50 µm, the negative electrode mixture slurry was applied onto the current collector using a spatula instead of the doctor blade.

Table 3 shows the results. Table 3 also shows the initial voltage of each lithium ion capacitor.

**[Table 3]**

| | Thickness of coating film (µm) | Thickness of negative electrode (µm) | Cₚ (mAh) | Cₙ/Cₚ | Initial voltage (V) | Discharge capacity (mAh) | Upper-limit voltage (V) |
|---|---|---|---|---|---|---|---|
| Example 9 | 300 | 170 | 3.73 | 12.5 | 2.99 | 0.31 | 5.0 |
| Example 1 | 200 | 120 | 2.49 | 8.3 | 2.88 | 0.31 | 5.0 |
| Example 10 | 150 | 95 | 1.87 | 6.3 | 2.86 | 0.31 | 5.0 |
| Example 11 | 100 | 70 | 1.25 | 4.2 | 2.81 | 0.30 | 5.0 |
| Example 12 | 50 | 45 | 0.64 | 2.1 | 2.62 | 0.28 | 5.0 |
| Example 13 | 40 | 35 | 0.38 | 1.3 | 2.14 | 0.25 | 5.0 |
| Example 14 | 35 | 33 | 0.32 | 1.1 | 1.63 | 0.19 | 5.0 |

In Examples 9 to 13, even when the upper-limit voltage for charging was 5 V, charging and discharging could be stably performed as in the case of Example 1, and the discharge capacity was as high as Cₚ. In these Examples, the initial voltage was also high. In Example 14, the initial voltage and the discharge capacity of the lithium ion capacitor were lower than those of other Examples. However, even when the upper-limit voltage for charging was 5V, charging and discharging could be stably performed. When the initial voltage is low, a charging state needs to be kept to compensate for the difference between the required voltage and the initial voltage, and thus the capacity tends to decrease. Therefore, the Cₙ/Cₚ ratio is preferably more than 1.1 in view of increases in initial voltage and discharge capacity.

In Example 9, the Cₙ/Cₚ ratio is larger than that in Example 1, but the initial voltage is substantially equal to that in Example 1. This is because, as the amount of lithium doped into the negative electrode comes close to the saturation amount, the negative electrode potential reaches substantially 0 V relative to a Li metal. Therefore, even if the Cₙ/Cₚ ratio is excessively increased, the discharge capacity of the lithium ion capacitor substantially does not change. However, an increase in the amount of the negative electrode results in an increase in the volume of the lithium ion capacitor in the cell. Thus, the capacitance density of the lithium ion capacitor decreases. Accordingly, the Cₙ/Cₚ ratio is preferably less than 12.5 in view of suppressing the decrease in the capacitance density of the lithium ion capacitor while achieving sufficient discharge capacity.

### Industrial Applicability

In the lithium ion capacitor of the present invention, charging and discharging can be reversibly performed in a stable manner even when the charging voltage is increased. Thus, a high-capacitance lithium ion capacitor can be produced. Therefore, the lithium ion capacitor can be applied to various power storage devices that require a high capacitance.

### Reference Signs List

- 40: capacitor
- 41: positive electrode
- 41a: positive electrode current collector
- 41b: positive electrode active material
- 42: negative electrode
- 42a: negative electrode current collector
- 42b: negative electrode active material
- 43: separator
- 45: cell case

## Claims

1. A lithium ion capacitor comprising a positive electrode containing a positive electrode active material, a negative electrode containing a negative electrode active material, a separator disposed between the positive electrode and the negative electrode, and a lithium ion conductive electrolyte,
wherein the electrolyte contains a lithium salt and an ionic liquid,
the lithium salt is a salt of a lithium ion serving as a first cation and a first anion, and the ionic liquid is a molten salt of a second cation and a second anion, and
the first anion and the second anion are the same.

2. The lithium ion capacitor according to Claim 1, wherein a total content of the lithium salt and the ionic liquid in the electrolyte is 90 mass% or more.

3. The lithium ion capacitor according to Claim 1 or 2, wherein the first anion and the second anion are each a bis(fluorosulfonyl)imide anion or a bis(trifluoromethylsulfonyl)imide anion.

4. The lithium ion capacitor according to any one of Claims 1 to 3, wherein the second cation is an organic onium cation.

5. The lithium ion capacitor according to Claim 4, wherein the organic onium cation has a nitrogen-containing heterocycle.

6. The lithium ion capacitor according to any one of Claims 1 to 5, wherein the electrolyte has a lithium concentration of 1 mol/L to 5 mol/L.

7. The lithium ion capacitor according to any one of Claims 1 to 6, wherein the negative electrode active material contains at least one selected from the group consisting of graphite and hard carbon.

8. The lithium ion capacitor according to any one of Claims 1 to 7, wherein a ratio Cₙ/Cₚ of a reversible capacitance Cₙ of the negative electrode to a reversible capacitance Cₚ of the positive electrode is 1.2 to 10.

9. A method for charging and discharging a lithium ion capacitor,
the lithium ion capacitor including a positive electrode containing a positive electrode active material, a negative electrode containing a negative electrode active material, a separator disposed between the positive electrode and the negative electrode, and a lithium ion conductive electrolyte,
the electrolyte containing a lithium salt and an ionic liquid,
the lithium salt being a salt of a lithium ion serving as a first cation and a first anion, and the ionic liquid being a molten salt of a second cation and a second anion, and
the first anion and the second anion being the same,
the method comprising a step of charging and discharging the lithium ion capacitor at an upper-limit voltage of more than 4.2 V and 5 V or less.
